# EUROPEAN PATENT APPLICATION

(11) **EP 2 542 028 A1**
(43) Date of publication of application: **02.01.2013**
(21) Application number: 12157875.1
(22) Date of filing: 02.03.2012
(51) Int. Cl.: H05B 33/08, H02J 9/06

(54) **Luminaire with emergency lighting function**

(30) Priority: 27.06.2011 JP 2011141568
(71) Applicant: Toshiba Lighting & Technology Corporation, Yokosuka-shi Kanagawa 237-8510 (JP)
(72) Inventor: Tsuji, Toshio, Kanagawa, 237-8510 (JP); Hiraoka, Toshiyuki, Kanagawa, 237-8510 (JP); Kamata, Masahiko, Kanagawa, 237-8510 (JP); Inoue, Masaru, Kanagawa, 237-8510 (JP); Tano, Noritaka, Kanagawa, 237-8510 (JP); Kawagoe, Makoto, Kanagawa, 237-8510 (JP); Tomiyama, Kazuya, Kanagawa, 237-8510 (JP)
(74) Representative: Willquist, Sofia Ellinor

(57) **Abstract**

According to one embodiment, a luminaire includes a dim lighting circuit, an emergency unit, a dimming-signal input section, and a dimming control circuit. The dim lighting circuit dimly lights a light source at a dimming ratio corresponding to a dimming signal. The emergency unit includes a charging circuit for charging a battery with an external power supply in a normal time and supplies a power supply of the battery to the dim lighting circuit in an emergency. The dimming-signal input section receives the input of the dimming signal from the outside. The dimming control circuit gives the dimming signal input from the dimming-signal input section to the dim lighting circuit in a normal time and gives a dimming signal having a dimming ratio for an emergency to the dim lighting circuit in an emergency.

## Description

### FIELD

Embodiments described herein relate generally to a luminaire including an emergency lighting function.

### BACKGROUND

In the past, there is a luminaire including an emergency lighting function for lighting a light source with an external power supply such as a commercial alternating-current power supply in a normal time and lighting the light source for time equal to or longer than a specified lighting time with a power supply such as a battery in an emergency when an interruption of the external power supply occurs.

As such a luminaire including the emergency lighting function, there is a luminaire in which an LED element is used as the light source and a lamp device including a lighting circuit for lighting the LED element can be replaced in an appliance device. The luminaire includes a battery, a charging circuit, and an emergency lighting circuit. In an emergency, the LED element of the lamp device is lit by the emergency lighting circuit using the battery as the power supply.

However, when the LED element of the lamp device is lit by the power supply of the battery in an emergency, if the LED element is lit in the same brightness as in a normal time, the battery is exhausted early and, depending on the capacity of the battery, the specified predetermined lighting time may not be able to be satisfied in an emergency.

Therefore, there is a demand for a luminaire that can reduce the exhaustion of the battery in an emergency and satisfy the specified predetermined lighting time in an emergency.

### BRIEF DESCRIPTION OF THE DRAWINGS

FIG. 1 is a circuit diagram of a luminaire according to a first embodiment;
FIG. 2 is a perspective view of a disassembled state of the luminaire;
FIG. 3 is a graph of a relation between a control input voltage and a dimming ratio in a dimming control method by a direct-current voltage of the luminaire;
FIG. 4 is a circuit diagram of a lamp device of a luminaire according to a second embodiment; and
FIG. 5 is a circuit diagram of a lamp device of a luminaire according to a third embodiment.

### DETAILED DESCRIPTION

According to one embodiment, a luminaire includes a dim lighting circuit, an emergency unit, a dimming-signal input section, and a dimming control circuit. The dim lighting circuit dimly lights a light source at a dimming ratio corresponding to a dimming signal. The emergency unit includes a charging circuit for charging a battery with an external power supply in a normal time and supplies a power supply of the battery to the dim lighting circuit in an emergency. The dimming-signal input section receives the input of the dimming signal from the outside. The dimming control circuit gives the dimming signal input from the dimming-signal input section to the dim lighting circuit in a normal time and gives a dimming signal having a dimming ratio for an emergency to the dim lighting circuit in an emergency.

With the luminaire, in an emergency, the power supply of the battery is supplied to the dim lighting circuit and the dimming signal having the dimming ratio for an emergency is given to the dim lighting circuit. Therefore, in an emergency, the dim lighting circuit can light the light source at the dimming ratio for an emergency, reduce exhaustion of the battery, and satisfy a specified predetermined lighting time in an emergency.

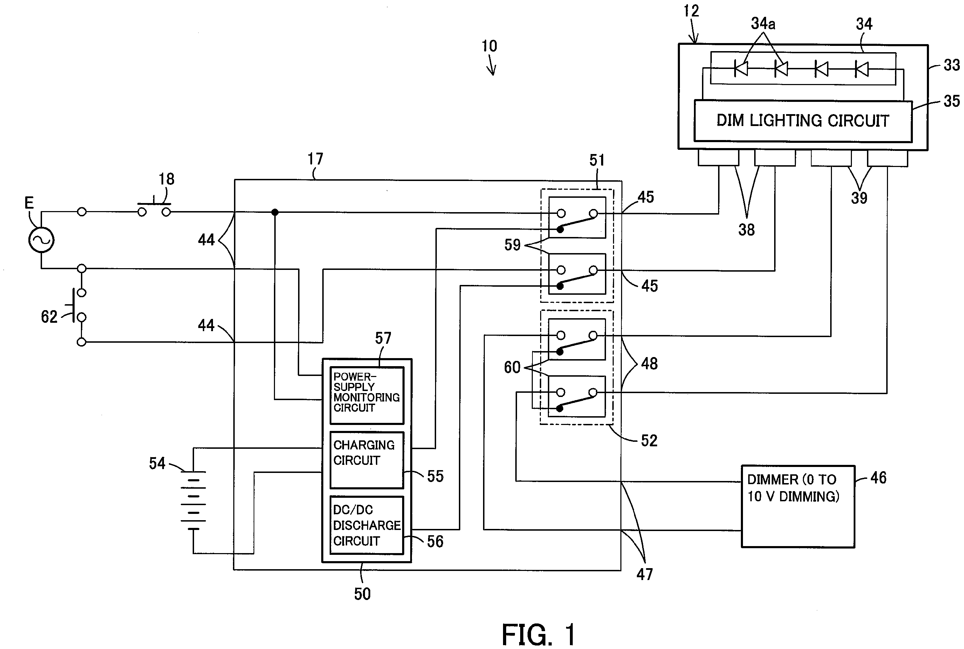

A first embodiment is explained below with reference to FIGS. 1 to 3.

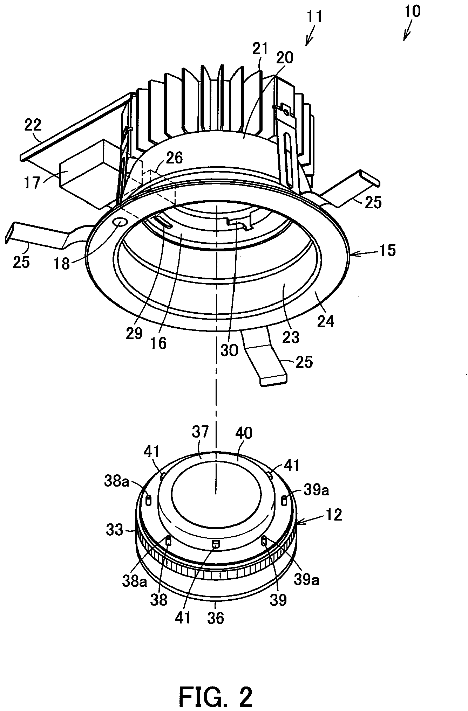

In FIG. 2, reference numeral 10 denotes a luminaire. The luminaire 10 is a recessed luminaire such as a downlight including an emergency lighting function. The luminaire 10 includes an appliance device 11 and a lamp device 12 detachably attached to the appliance device 11.

The appliance device 11 includes an appliance device main body 15, a socket 16 functioning as a lamp-device attaching section that is arranged in the appliance device main body 15 and to which the lamp device 12 is detachably attached, an emergency device 17 that lights the lamp device 12 in an emergency when power interruption occurs, and an inspection switch 18 for inspecting the emergency device 17.

The appliance device main body 15 includes a reflector 20, a thermal radiator 21 attached to an upper part of the reflector 20, and an attachment plate 22 attached to an upper part of the thermal radiator 21. The reflector 20 includes a reflection surface section 23 expanded and opened downward and an edge section 24 formed toward the circumference from a lower part of the reflection surface section 23. Plural attachment springs 25 for setting the appliance device main body 15 on a ceiling are attached to the thermal radiator 21. A power supply terminal table 26 that connects a power supply line for supplying a commercial alternating-current power supply as an external power supply, a dimming terminal table (not shown) that connects a signal line for inputting a dimming signal from the outside, the emergency device 17 that lights the lamp device 12 in an emergency, and the like are attached to the attachment plate 22.

The socket 16 is formed in an annular shape. Plural connection holes 29 (in FIG. 2, one connection hole 29 is shown and the other connection holes 29 are hidden by the reflector 20) are formed in a long hole shape along the circumferential direction on a lower surface of the socket 16. Attachment grooves 30 having a substantially L shape for pivoting and detachably attaching the lamp device 12 are formed on an inner circumferential surface of the socket 16. The plural connection holes 29 include two connection holes 29 for the power supply and two connection holes 29 for the dimming signal. Terminals are respectively arranged on the inner side of the connection holes 29. The terminals are connected to the emergency device 17.

As shown in FIGS. 1 and 2, the lamp device 12 includes a housing 33 and a light source 34, a dim lighting circuit 35, and the like housed in the housing 33.

The housing 33 is formed in a cylindrical shape. A light transmissive cover 36 that transmits light from the light source 34 is attached to a lower part of the housing 33. A cap 37 detachably attached to the socket 16 is formed in an upper part of the housing 33. The housing 33 and the light transmissive cover 36 are suitably formed of an incombustible material or a refractory material in order to secure a lighting action of the lamp device 12 in a high-temperature atmosphere such as a fire. A pair of lamp pins 38a, which are power-supply input sections 38, are protrudingly provided in a peripheral section of the cap 37. A pair of lamp pins 39a, which are dimming-signal input sections 39, to which the dimming signal is input are protrudingly provided in the peripheral section. A cylindrical projecting section 40 is protrudingly provided in the center of the cap 37. Plural keys 41 are projected on a circumferential surface of the projecting section 40.

In attaching the lamp device 12 to the socket 16, a user inserts the keys 41 into the attachment grooves 30 of the socket 16 and inserts the lamp pins 38a and 39a into the connection holes 29 of the socket 16 while inserting the projecting section 40 of the cap 37 into an inner space of the socket 16. After the insertion, the user pivots the lamp device 12 a predetermined angle with respect to the socket 16, hooks and attaches the keys 41 to the attachment grooves 30 of the socket 16, and connects the lamp pins 38a and 39a to the terminals on the inner side of the connection holes 29. In detaching the lamp device 12 from the socket 16, the user only has to perform a procedure opposite to the procedure during the attachment.

A semiconductor light-emitting element such as an LED element or an EL element is used in the light source 34. In this embodiment, plural LED elements 34a are used.

The pair of lamp pins 38a, which are the power-supply input sections 38, and the pair of lamp pins 39a, which are the dimming-signal input sections 39, are electrically connected to the dim lighting circuit 35. The plural LED elements 34a are connected to the dim lighting circuit 35 in series. The dim lighting circuit 35 includes, for example, a circuit that rectifies and smoothes a commercial alternating-current power supply E input to the power-supply input sections 38 and a DC/DC converter including a switching element that converts a rectified and smoothed direct-current power supply into a predetermined direct-current power supply. The light source 34 (the LED elements 34a) is lit by the direct-current power supply output from the DC/DC converter. The dim lighting circuit 35 can receive the input of the commercial alternating-current power supply E from the power-supply input sections 38 and light the power supply 34. Further, the dim lighting circuit 35 can also light the light source 34 if the predetermined direct-current power supply is input from the power-supply input sections 38. The dim lighting circuit 35 can light the light source 34 with either the alternating-current power supply or the direct-current power supply using the common power-supply input sections 38.

The dim lighting circuit 35 can receive the input of the dimming signal from the dimming-signal input sections 39, control the switching element of the DC/DC converter at a dimming ratio corresponding to the dimming signal, and dimly light the light source 34 (the LED elements 34a) in a range of a dimming lower limit (e.g., 20%) to full lighting (e.g., 100%) . As a dimming control system of the dim lighting circuit 35, a dimming control system by a direct-current voltage specified in JIS C8120 is adopted. Details of the dimming control system are explained later.

As shown in FIG. 1, the emergency device 17 includes alternating-current-power-supply input sections 44 to which the commercial alternating-current power supply E is input, power-supply output sections 45 that output the commercial alternating-current power supply E or the direct-current power supply to the power-supply input sections 38 of the lamp device 12, dimming-signal input sections 47 connected to a dimmer 46 set on the outside, and dimming-signal output sections 48 connected to the dimming-signal input sections 39 of the lamp device 12 through the terminals of the socket 16.

Further, the emergency device 17 includes an emergency unit 50, a power-supply switching circuit 51, and a dimming control circuit 52.

The emergency unit 50 includes a battery 54, a charging circuit 55 that charges the battery 54 with the commercial alternating-current power supply E in a normal time when the commercial alternating-current power supply E is supplied, a DC/DC discharge circuit 56 that converts the direct-current power supply of the battery 54 into the predetermined direct-current power supply and outputs the predetermined direct-current power supply to the power-supply switching circuit 51 in an emergency, and a power-supply monitoring circuit 57 that monitors energization and power interruption (power cut) of the commercial alternating-current power supply E. The battery 54 is arranged on the outside of the emergency device 17.

The power-supply switching circuit 51 includes a pair of relay switches 59 that switch the connection of the commercial alternating-current power supply E and the emergency unit 50 (the battery 54) to the power-supply input sections 38 of the lamp device 12. The relay switches 59 receive power supply from the emergency unit 50, operate in association with presence or absence of the supply of the commercial alternating-current power supply E to the emergency unit 50, change to a switching state for connecting the commercial alternating-current power supply E to the power-supply input sections 38 of the lamp device 12 in a normal time, and change to a switching state for connecting the emergency unit 50 (the battery 54) to the power-supply input sections 38 of the lamp device 12 in an emergency (a state shown in FIG. 1) .

The dimming control circuit 52 includes a pair of relay switches 60 interposed between the dimming-signal input sections 39 of the lamp device 12 and the dimmer 46. For example, the relay switches 60 operate in association with presence or absence of the supply of the commercial alternating-current power supply E to the emergency unit 50, change to a switching state for connecting the dimmer 46 to the dimming-signal input sections 39 of the lamp device 12 in a normal time, and change to a switching state for separating the dimmer 46 from the dimming-signal input sections 39 of the lamp device 12 and short-circuiting the pair of dimming-signal input sections 39 in an emergency (the state shown in FIG. 1).

In the alternating-current-power-supply input sections 44 of the emergency device 17, one pole of the commercial alternating-current power supply E is input to the emergency unit 50 and the power-supply switching circuit 51 via the inspection switch 18. The other pole of the commercial alternating-current power supply E is connected to the emergency unit 50 and connected to the power-supply switching circuit 51 via a wall switch 62.

As shown in FIG. 2, the inspection switch 18 is arranged at the edge section 24 of the reflector 20 and can be operated from the outside. The inspection switch 18 is configured to be turned on in a normal time and turned off according to the operation from the outside.

The operation of the luminaire 10 is explained.

In a normal time when the commercial alternating-current power supply E is supplied, the commercial alternating-current power supply E is supplied to the emergency unit 50. Therefore, the power-supply monitoring circuit 57 checks the supply of the commercial alternating-current power supply E and the charging circuit 55 charges the battery 54 with the commercial alternating-current power supply E. Further, the relay switches 59 of the power-supply switching circuit 51 change to the switching state for connecting the commercial alternating-current power supply E to the power-supply input sections 38 of the lamp device 12. The relay switches 60 of the dimming control circuit 52 change to the switching state for connecting the dimmer 46 to the dimming-signal input sections 39 of the lamp device 12.

When the wall switch 62 is on, the commercial alternating-current power supply E is input to the power-supply input sections 38 of the lamp device 12 through the power-supply switching circuit 51. The light source 34 is lit by the dim lighting circuit 35 of the lamp device 12.

At this point, the light source 34 lit by the dim lighting circuit 35 of the lamp device 12 is dimly lit at brightness corresponding to a dimming ratio set by the dimmer 46. As a dimming control system in the dim lighting circuit 35 of the lamp device 12 and the dimmer 46, as explained above, the dimming control system by a direct-current voltage specified in JIS C8120 is adopted.

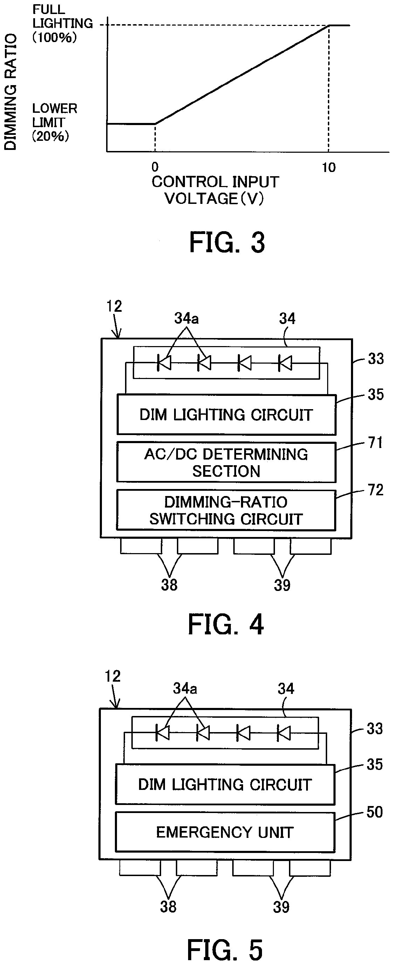

Specifically, the dim lighting circuit 35 of the lamp device 12 supplies the predetermined direct-current power to the dimmer 46 through the dimming control circuit 52. The dimmer 46 includes a dimming setting section that sets the dimming ratio. The dimmer 4 changes a control input voltage serving as direct-current power to the dim lighting circuit 35 and the dimming control circuit 52 in a range of 0 V to 10 V according to the operation of the dimming setting section. As shown in FIG. 3, the dimming ratio corresponding to the control input voltage is specified. When the control input voltage is 0 V, the dimming ratio is a lower limit dimming ratio (e.g., 20%). When the control input voltage is 10 V, the dimming ratio is an upper limit dimming ratio of full lighting (e.g., 100%). When the control input voltage is in the range of 0 V to 10 V, the dimming ratio changes between the lower limit and the full lighting.

Therefore, a dimming signal (the control input voltage) of the dimming ratio set by the dimmer 46 is input to the dimming-signal input sections 39 of the lamp device 12 through the dimming control circuit 52. The dim lighting circuit 35 of the lamp device 12 dimly lights the light source 34 at the dimming ratio corresponding to the input dimming signal (control input Voltage).

When the wall switch 62 is off, the supply of the commercial alternating-current power supply E to the lamp device 12 is cut off and the light source 34 of the lamp device 12 lights out. The commercial alternating-current power supply E is continuously supplied to the emergency unit 50. Therefore, the charging of the battery 54 is continued and the switching state of the relay switches 59 of the power-supply switching circuit 51 and the switching state of the relay switches 60 of the dimming control circuit 52 are maintained.

In an emergency when power interruption of the commercial alternating-current power supply E occurs, the supply of the commercial alternating-current power supply E to the emergency unit 50 is cut off. Therefore, in association with the cut-off of the supply of the commercial alternating-current power supply E, the relay switches 59 of the power-supply switching circuit 51 change to the switching state for connecting the emergency unit 50 (the battery 54) to the power-supply input sections 38 of the lamp device 12. The relay switches 60 of the dimming control circuit 52 change to the switching state for separating the dimmer 46 from the dimming-signal input sections 39 of the lamp device 12 and short-circuiting the pair of dimming-signal input sections 39.

The power-supply monitoring circuit 57 of the emergency unit 50 confirms the cut-off of the commercial alternating-current power supply E, whereby the DC/DC discharge circuit 56 converts the direct-current power supply of the battery 54 into the predetermined direct-current power supply and outputs the predetermined direct-current power supply. The direct-current power supply is input to the power-supply input sections 38 of the lamp device 12 through the power-supply switching circuit 51. The light source 34 is lit by the dim lighting circuit 35 of the lamp device 12.

At this point, the light source 34 lit by the dim lighting circuit 35 of the lamp device 12 is dimly lit at brightness corresponding to the dimming ratio set by the dimming control circuit 52.

Specifically, the dim lighting circuit 35 of the lamp device 12 supplies the predetermined direct-current power to the dimming control circuit 52. In the dimming control circuit 52, the relay switches 60 short-circuit the pair of dimming-signal input sections 39 of the lamp device 12. Therefore, the control input voltage is 0 V. The dimming control circuit 52 controls the dimming ratio for an emergency to the lower limit dimming ratio (e.g., 20%).

Therefore, the dimming signal (the control input voltage) at the lower limit dimming ratio controlled by the dimming control circuit 52 is input to the dimming-signal input sections 39 of the lamp device 12. The dim lighting circuit 35 of the lamp device 12 dimly lights the light source 34 at the lower limit dimming ratio according to the input dimming signal (control input Voltage).

In a normal time, the supply of the commercial alternating-current power supply E to the emergency unit 50 is cut off according to the operation of the inspection switch 18. Therefore, the luminaire 10 is in the same state as in an emergency. If expiration of the life of the battery 54, a failure of the emergency unit 50, or the like occurs, the lamp device 12 is not lit even if the inspection switch 18 is operated. Therefore, a deficiency can be confirmed.

As explained above, with the luminaire 10 according to this embodiment, in an emergency, the power supply of the battery 54 of the emergency unit 50 is supplied to the lamp device 12 and the dimming signal of the dimming ratio in an emergency is given to the lamp device 12. Therefore, the lamp device 12 can light the light source 34 at the lower limit dimming ratio for an emergency. Therefore, it is possible to reduce the exhaustion of the battery 54 and satisfy the specified predetermined lighting time in an emergency.

The commercial alternating-current power supply E is input to the lamp device 12 from the common power-supply input sections 38 in a normal time. The direct-current power supply is input to the lamp device 12 from the battery 54 in an emergency. The dim lighting circuit 35 can dimly light the light source 34 with either the alternating-current power supply or the direct-current power supply input to the common power-supply input sections 38. In general, such a lamp device 12 fully lights the light source 34 if the dimming signal is not input. Therefore, if the dimming signal is not input in an emergency, the light source 34 is fully lit by the power supply of the battery 54 and the battery 54 is exhausted early. In this embodiment, in an emergency, the dimming control circuit 52 can give the dimming signal of the dimming ratio for an emergency to the lamp device 12. Therefore, the lamp device 12 can light the light source 34 at the lower limit dimming ratio for an emergency and reduce the exhaustion of the battery 54.

If the dimming ratio for an emergency is set to the lower limit dimming ratio in the range of dimming ratios at which dimming can be performed, it is possible to suppress the exhaustion of the battery 54 most. However, when brightness necessary in an emergency is secured, the dimming ratio for an emergency is not limited to the lower limit dimming ratio and may be set to a dimming ratio for an emergency for enabling the suppression of the exhaustion of the battery 54 in addition to satisfying the brightness.

The emergency device 17 may be attached to the appliance device main body 15 or may be arranged in a place separate from the appliance device main body 15.

The luminaire 10 according to a second embodiment is explained with reference to FIG. 4.

In the luminaire 10, the dimming ratio in an emergency is set by the dimming control circuit 52 provided in the appliance device 11. However, the dimming ratio in an emergency may be set by providing an AC/DC determining circuit 71 and a dimming-ratio switching circuit 72 in the lamp device 12.

The AC/DC determining circuit 71 is provided to be connected to the power-supply input sections 38 on the inside of the housing 33 of the lamp device 12. The dimming-ratio switching circuit 72 is provided to be connected to the dimming-signal input sections 39 on the inside of the housing 33 of the lamp device 12. The AC/DC determining circuit 71 and the dimming-ratio switching circuit 72 may be provided in the dim lighting circuit 35 or may be provided separately from the dim lighting circuit 35.

The AC/DC determining circuit 71 determines which of the commercial alternating-current power supply E and the direct-current power supply from the emergency unit 50 the power supply supplied to the power-supply input sections 38 is. If the power supply is the supply of the commercial alternating-current power supply E, the dimming-ratio switching circuit 72 inputs the dimming signal input to the dimming-signal input sections 39 to the dim lighting circuit 35. On the other hand, if the power supply is the supply of the direct-current power supply from the emergency unit 50, the dimming-ratio switching circuit 72 inputs the dimming ratio for an emergency (e.g., 20%) set in advance in the dimming-ratio switching circuit 72 to the dim lighting circuit 35 rather than the dimming signal input to the dimming-signal input sections 39 from the dimmer 46. Therefore, in an emergency, the light source 34 is subjected to lighting control by the dim lighting circuit 35 at the dimming ratio for an emergency set in advance.

With the luminaire 10, even if the emergency device 17 does not include the dimming-signal input sections 47 and the dimming control circuit 52, since the AC/DC determining circuit 71 and the dimming-ratio switching circuit 72 are provided in the lamp device 12, in an emergency, it is possible to subject the light source 34 to lighting control at the dimming ratio for an emergency set in advance.

The luminaire 10 according to a third embodiment is explained with reference to FIG. 5.

In the embodiments explained above, the emergency unit 50 for the luminaire 10 is provided in the emergency device 17. However, the emergency unit 50 may be provided in the lamp device 12. In this case, the battery 54 may be provided on the inside of the housing 33 of the lamp device 12 or may be provided on the outside of the housing 33. If the battery 54 is provided on the outside of the housing 33 of the lamp device 12, the battery 54 is suitably provided between the dimming-signal output sections 48 and the dimming-signal input sections 39. It is possible to facilitate replacement of the battery 54 by providing the battery 54 in this way. A supply path of the battery 54 and a transmission path of the dimming signal are provided in common. Therefore, it is possible to use the lamp device 12 and the luminaire 10 as an emergency luminaire without providing a new lamp pin in the lamp device 12.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. A luminaire (10) comprising:
a dim lighting circuit (35) configured to dimly light a light source (34) at a dimming ratio corresponding to a dimming signal;
an emergency unit (50) including a charging circuit (55) for charging a battery (54) with an external power supply in a normal time and configured to supply a power supply of the battery (54) to the dim lighting circuit (35) in an emergency;
a dimming-signal input section (47) configured to receive input of the dimming signal from an outside; and
a dimming control circuit (52) configured to give the dimming signal input from the dimming-signal input section (47) to the dim lighting circuit (35) in a normal time and give a dimming signal having a dimming ratio for an emergency to the dim lighting circuit (35) in an emergency.

2. The luminaire (10) according to claim 1, wherein the dim lighting circuit (35) includes a common power-supply input section (38) configured to receive input of an alternating-current power supply as the external power supply in a normal time and receive input of a direct-current power supply from the battery (54) in an emergency, the dim lighting circuit (35) being capable of dimly lighting the light source (34) with either the alternating-current power supply or the direct-current power supply input to the common power-supply input section (38).
